# FASCICULE DE BREVET EUROPEEN

(11) **EP 2 969 607 B1**
(45) Date de publication et mention de la délivrance du brevet: **19.07.2017**
(21) Numéro de dépôt: 14713525.5
(22) Date de dépôt: 04.03.2014
(51) Int. Cl.: B60G 11/16, F16F 1/12

(54) **COUPELLE DE RESSORT**
FEDERTELLER
SPRING PLATE

(30) Priorité: 11.03.2013 FR 1352133
(43) Date de publication de la demande: 20.01.2016
(73) Titulaire: Peugeot Citroën Automobiles SA, 78140 Vélizy Villacoublay (FR)
(72) Inventeur: BALAY, Lionnel, F-71310 La Racineuse (FR)
(86) Numéro de dépôt international: PCT/FR2014/050473
(87) Numéro de publication internationale: WO 2014/140450

(56) Documents cités:
- EP-A2- 1 128 085
- EP-A2- 2 524 826
- DE-A1-102005 050 024
- FR-A1- 2 894 639
- FR-A1- 2 973 738
- JP-A- H11 310 021
- US-A- 6 149 171
- US-B1- 6 254 072

## Description

La présente invention se rapporte à une coupelle comportant un élément de maintien de cette coupelle sur un ressort hélicoïdal. L'invention concerne également un procédé d'assemblage d'un ressort hélicoïdal sur une coupelle au moyen de cet élément de maintien.

L'invention s'applique en particulier au domaine des véhicules automobiles et plus particulièrement aux suspensions comportant un ressort hélicoïdal.

Lors du montage sur un véhicule d'un ressort hélicoïdal d'un dispositif de suspension, ce ressort est généralement monté précontraint entre une coupelle supérieure prenant appui sur la caisse du véhicule et une coupelle inférieure prenant appui sur une pièce solidaire d'au moins une roue de ce véhicule. Ainsi, la coupelle inférieure doit par exemple être solidarisée avec le ressort avant son montage sur le véhicule pour éviter de perdre cette coupelle lors du montage.

On connaît, par le document FR-2-973-738-A1, un élément solidaire d'une coupelle et conformé pour recevoir l'extrémité d'un ressort hélicoïdal, de manière à solidariser le ressort et la coupelle avant le montage de ce ressort sur un véhicule automobile. Ce document fait également référence à d'autres éléments de maintien d'une coupelle sur un ressort hélicoïdal, au moyen d'un ou plusieurs éléments disposés sur le pourtour de la coupelle, pour solidariser le ressort avec la coupelle avant leur montage sur le véhicule.

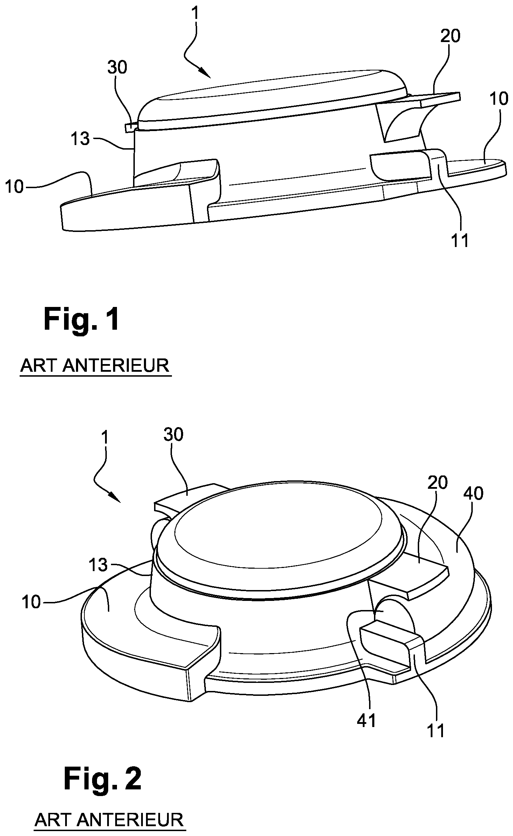

Par exemple, une coupelle 1 avec des éléments 20 et 30 de maintien selon l'art antérieur est représentée sur la figure 1. Une telle coupelle 1 comprend généralement une partie centrale en forme de cylindre ou de cône tronqué présentant une surface latérale appelée surface de centrage 13. Une rampe 10 est aménagée autour de cette partie centrale. Une butée 11 est disposée à une extrémité de la rampe 10. Les éléments 20 et 30 de maintien, tels que des ergots, sont liés à la surface de centrage 13.

La figure 2, qui illustre également l'art antérieur, présente une spire terminale 40 d'un ressort hélicoïdal assemblée sur la coupelle 1. La spire terminale 40 de ressort est positionnée en appui sur la rampe 10. La surface de centrage 13 permet d'assurer un positionnement correct de cette spire 40. La spire terminale 40 comprend à son extrémité une surface appelée départ de spire 41 de ressort.

Le départ de spire 41 est stoppé par la butée 11 de la coupelle 1 lors de l'assemblage du ressort avec la coupelle 1, sous les éléments 20 et 30 de maintien.

Les éléments 20 et 30 de maintien sont disposés à une distance de la rampe 10, choisie de manière à ménager un espace entre ces éléments et la rampe correspondant sensiblement au diamètre de la spire terminale 40 de ressort.

Le ressort hélicoïdal comporte deux extrémités. Il est possible de disposer une coupelle 1 uniquement à une des extrémités de ce ressort, par exemple à l'extrémité inférieure (auquel cas on parle d'une coupelle inférieure), ou à chacune des extrémités de ce ressort (avec une coupelle inférieure et une coupelle supérieure).

L'assemblage de ce ressort hélicoïdal et de la coupelle 1 est par exemple destiné à être monté dans un dispositif de suspension d'un véhicule automobile. Le ressort est comprimé pour sa mise en place dans le véhicule. Lors de cette phase de compression il existe des risques de perte ou de déplacement de la coupelle 1 vis-à-vis de la spire terminale 40 pouvant conduire à un mauvais positionnement du ressort par rapport à la coupelle 1. Il arrive par exemple que la spire terminale 40 ne suive plus le profil de la rampe 10 de la coupelle 1. Il est donc important pour éviter ces risques qu'une pression suffisante soit exercée par un moins un élément de maintien 20 ou 30 sur la spire terminale.

Plusieurs diamètres de spire terminale de ressort peuvent être employés, par exemple en fonction de la masse du véhicule sur lequel le ressort est monté. Les éléments 20 et 30 de maintien d'une coupelle 1 selon l'art antérieur présentent l'inconvénient de ne pas s'adapter aux différents diamètres qui peuvent être utilisés pour la spire terminale 40 de ressort. Afin d'assurer un maintien suffisant de cette spire 40, tout en permettant un assemblage sans difficulté de la coupelle 1 avec le ressort, on conçoit habituellement pour chaque diamètre de ressort une coupelle 1 avec des éléments 20 et 30 de maintien positionnés à une distance prédéfinie de la rampe 10 de la coupelle 1. Cette distance prédéfinie est sensiblement égale au diamètre de la spire terminale du ressort à assembler avec la coupelle.

Les dispositifs connus de maintien d'une coupelle présentent donc l'inconvénient de ne pas s'adapter à un diamètre du ressort hélicoïdal qui peut varier en fonction du véhicule sur lequel le ressort est assemblé. Il est alors nécessaire de concevoir plusieurs coupelles pour rendre possible l'assemblage de la coupelle sur le ressort tout en assurant un maintien suffisamment efficace pour éviter la perte ou le déplacement de la coupelle lors du montage du ressort sur le véhicule.

Le document FR2894639 A1 montre aussi l'état de la technique. L'invention a pour but de remédier aux inconvénients de l'art antérieur au moyen d'une coupelle comportant un élément de maintien adaptatif sur des ressorts de diamètre variable. L'invention consiste également en un procédé d'assemblage d'une telle coupelle sur des ressorts dont le diamètre est variable.

Dans ce but, la présente invention propose une coupelle comportant au moins un élément de maintien pour solidariser cette coupelle avec une spire terminale d'un ressort hélicoïdal, la coupelle comprenant une rampe d'appui de cette spire et une surface de centrage de cette même spire, la coupelle étant remarquable en ce que l'élément de maintien est déformable, de manière à ce que la spire terminale présente au moins une surface de contact permanente d'une part avec l'élément de maintien et d'autre part avec la rampe pour des diamètres variables de la spire terminale.

Ainsi, l'invention permet d'adapter le maintien de la coupelle à des diamètres variables de spires.

Selon une caractéristique particulière, l'élément de maintien fait saillie à partir de la surface de centrage mentionnée précédemment.

Selon une caractéristique particulière, la coupelle comprend une butée destinée à stopper un départ de spire de la spire terminale du ressort.

Selon une caractéristique particulière, l'élément de maintien est une lamelle dont la forme naturelle au repos est inclinée vers la rampe de la coupelle.

Cette caractéristique permet d'assurer un contact permanent de la lamelle sur la surface supérieure de la spire terminale du ressort après son insertion, y compris pour de faibles diamètres de cette spire.

Selon une caractéristique particulière, l'élément de maintien est une lamelle présentant un profil conique.

Le profil conique de la lamelle permet de faciliter l'insertion de la spire terminale du ressort.

Dans le même but que celui indiqué précédemment, l'invention a aussi pour objet un dispositif de suspension d'un véhicule automobile remarquable en ce qu'il comporte au moins une coupelle présentant l'une quelconque des caractéristiques précédentes.

Selon une caractéristique particulière de ce dispositif de suspension d'un véhicule automobile, la coupelle est une coupelle inférieure d'un ressort de ce dispositif.

Dans le même but, l'invention a aussi pour objet un véhicule automobile comportant un tel dispositif de suspension.

L'invention vise également un procédé d'assemblage d'une spire terminale d'un ressort hélicoïdal et d'une coupelle présentant l'une quelconque des caractéristiques précédentes, remarquable en ce qu'il comprend des étapes consistant à :
- positionner la spire terminale du ressort sur la rampe de la coupelle ;
- introduire cette spire sous l'élément de maintien.

Selon une caractéristique particulière, ce procédé d'assemblage comprend en outre une étape consistant à :
- positionner le départ de spire de cette spire terminale en contact avec la butée mentionnée plus haut.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :
- la figure 1, déjà décrite, est une vue en perspective d'une coupelle comprenant des éléments de maintien d'un ressort selon l'art antérieur ;
- la figure 2, déjà décrite, est une vue de cette même coupelle selon l'art antérieur après son assemblage avec une spire terminale d'un ressort hélicoïdal ;
- la figure 3 est une vue en perspective d'une coupelle comprenant un élément de maintien selon l'invention ;
- la figure 4 est une vue d'une coupelle selon l'invention après son assemblage avec une spire de ressort hélicoïdal de diamètre minimum ;
- la figure 5 est une vue d'une coupelle selon l'invention après son assemblage avec une spire de ressort hélicoïdal de diamètre maximum.

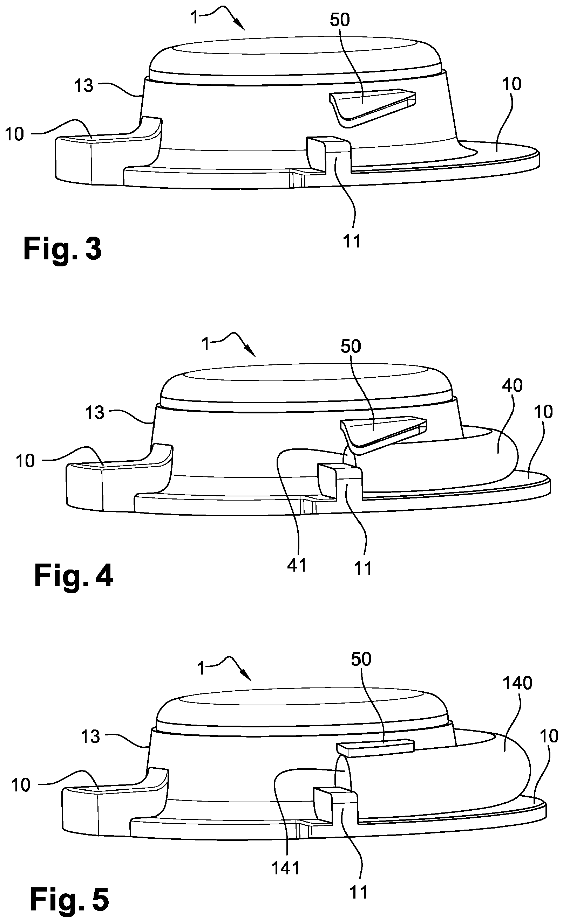

Conformément à l'invention, la coupelle 100 représentée sur la figure 3 comporte au moins un élément 50 de maintien. De même que la coupelle 1 de l'art antérieur, la coupelle 100 comprend une partie centrale en forme de cylindre ou de cône tronqué présentant une surface latérale appelée surface de centrage 13. Une rampe 10 est aménagée autour de cette partie centrale et une butée 11 à une extrémité de la rampe 10.

L'élément 50 de maintien est déformable et fait saillie à partir de la surface de centrage 13. Cet élément 50 est par exemple une lamelle déformable dont la forme naturelle au repos, c'est-à-dire en l'absence de ressort, est inclinée vers la rampe 10 de la coupelle 100. Cette lamelle déformable présente de manière préférentielle un profil conique.

L'élément 50 de maintien peut par exemple être réalisé dans un matériau tel que l'Ethylène-Propylène-Diène Monomère (EPDM), le Polyuréthane (PU), un composé de Polypropylène et de Styrène Ethylène Butylène Styrène (PP+SEBS), ou encore le caoutchouc. De manière générale, on pourra utiliser toute matière souple (non rigide) et présentant une résistance électrique suffisante pour ne pas corroder le ressort.

De préférence l'élément 50 de maintien est positionné à proximité de la butée 11, en regard d'une extrémité de la rampe 10.

Les figures 4 et 5 permettent de mieux comprendre le rôle de l'élément 50.

La figure 4 montre une spire terminale 40 d'un premier ressort avec un diamètre de spire minimum acceptable par la coupelle 100 dans un mode particulier de réalisation de l'invention. La spire 40 est tout d'abord positionnée sur la rampe 10. Lors de l'insertion de cette spire 40 entre la rampe 10 et l'élément 50, jusqu'au contact du départ de spire 41 avec la butée 11, la forme naturellement inclinée de l'élément 50 assure un contact permanent avec la partie supérieure de la spire 40. Ainsi la spire 40 est maintenue avec une pression suffisante sur la rampe 10 et présente au moins une surface de contact permanente d'une part avec l'élément 50 de maintien et d'autre part avec la rampe 10. On évite ainsi les risques de perte ou de déplacement de la coupelle 100 mentionnés précédemment lors de la compression de ce premier ressort en vue de son montage sur un véhicule automobile. La rampe 10 de la coupelle 100 est par conséquent maintenue correctement positionnée sur la spire terminale 40 du premier ressort.

Par ailleurs, la pression exercée par l'élément 50 de maintien n'est pas non plus trop élevée, ce qui fait que l'insertion de la spire ne pose pas de difficultés. Le profil conique de l'élément 50 permet également de faciliter cette insertion.

La spire terminale 140 du second ressort présenté sur la figure 5 présente un diamètre maximum acceptable par la coupelle dans le mode de réalisation présenté. Lors de l'insertion de cette spire 140 entre la rampe 10 et l'élément 50, l'élément 50 se déforme vers le haut et libère un espace suffisant pour l'insertion de la spire 140 jusqu'au contact du départ de spire 141 avec la butée 11.

Après l'assemblage, l'élément 50 de maintien est en contact permanent avec la partie supérieure de la spire 140. Ainsi la spire 140 est maintenue avec une pression suffisante sur la rampe 10 et présente au moins une surface de contact permanente d'une part avec l'élément 50 de maintien et d'autre part avec la rampe 10. On évite là encore les risques de perte ou de déplacement de la coupelle 100 mentionnés précédemment. La rampe 10 de la coupelle 100 est par conséquent maintenue correctement positionnée sur la spire terminale 140 du second ressort.

Par ailleurs, la pression exercée par l'élément 50 de maintien est suffisamment réduite pour que l'insertion de la spire ne pose pas de difficultés.

Le profil conique de l'élément 50 joue dans l'exemple de la figure 5 un rôle encore plus déterminant pour faciliter l'insertion que dans l'exemple de la figure 4. Ce profil conique permet d'avoir un espace plus important entre l'élément 50 et la rampe 10 au niveau de la zone par laquelle l'insertion de la spire 140 est réalisée. La déformation de l'élément 50 est progressive, ce qui facilite grandement l'insertion pour les plus grands diamètres de spires.

L'élément 50 de maintien de la coupelle 100 selon l'invention est bien entendu adapté pour tous les diamètres de spire compris entre les diamètres minimum et maximum présentés en exemple.

Dans le mode particulier de réalisation présenté, la coupelle est adaptée pour des diamètres de spire allant de 9.9 mm à 13.2 mm.

La coupelle 100 est par exemple une coupelle inférieure d'un dispositif de suspension d'un véhicule automobile.

Ainsi, la coupelle et le procédé d'assemblage de cette coupelle sur un ressort hélicoïdal présentés ci-dessus sont adaptés à un diamètre variable de spire de ressort. L'invention permet d'éviter les risques de perte ou de déplacement de la coupelle vis-à-vis de ce ressort, et permet de faciliter l'assemblage de la coupelle avec le ressort.

## Revendications

1. Coupelle (100) comportant au moins un élément (50) de maintien pour solidariser ladite coupelle (100) avec une spire terminale (40, 140) d'un ressort hélicoïdal, ladite coupelle (100) comprenant une rampe (10) d'appui de ladite spire (40, 140) et une surface de centrage (13) de cette spire terminale (40, 140), ledit élément (50) étant déformable, de manière à ce que ladite spire (40, 140) présente au moins une surface de contact permanente d'une part avec ledit élément (50) et d'autre part avec ladite rampe (10) pour des diamètres variables de ladite spire terminale (40, 140), ladite coupelle étant **caractérisée en ce que** ledit élément (50) est une lamelle dont la forme naturelle au repos est inclinée vers ladite rampe (10).

2. Coupelle (100) selon la revendication 1, **caractérisée en ce que** ledit élément (50) fait saillie à partir de ladite surface de centrage (13).

3. Coupelle (100) selon la revendication 1 ou 2, **caractérisée en ce que** ladite coupelle comprend une butée (11) destinée à stopper un départ de spire (41, 141) de ladite spire (40, 140).

4. Coupelle (100) selon l'une quelconque des revendications précédentes, **caractérisée en ce que** ledit élément (50) est une lamelle présentant un profil conique.

5. Dispositif de suspension d'un véhicule automobile **caractérisé en ce qu'**il comporte au moins une coupelle (100) selon l'une quelconque des revendications précédentes.

6. Dispositif de suspension d'un véhicule automobile selon la revendication 5, caractérisé ce que ladite coupelle (100) est une coupelle inférieure d'un ressort dudit dispositif de suspension.

7. Véhicule automobile **caractérisé en ce qu'**il comporte un dispositif de suspension selon la revendication 5 ou 6.

8. Procédé d'assemblage d'une spire terminale (40, 140) d'un ressort hélicoïdal et d'une coupelle (100) selon l'une quelconque des revendications 1 à 4, **caractérisé en ce qu'**il comprend des étapes consistant à :
- positionner ladite spire (40, 140) sur ladite rampe (10) ;
- introduire ladite spire (40, 140) sous ledit élément (50).

9. Procédé d'assemblage selon la revendication 8, **caractérisé en ce qu'**il comprend en outre une étape consistant à :
- positionner ledit départ de spire (41, 141) en contact avec ladite butée (11).

## Patentansprüche

1. Federteller (100), zumindest ein Halteelement (50) zum festen Verbinden des besagten Federtellers (100) mit einer Endwindung (40, 140) einer Spiralfeder umfassend, wobei der besagte Federteller (100) eine Rampe (10) zum Anlegen der besagten Windung (40, 140), und eine Zentrierfläche (13) für diese Endwindung (40, 140) umfasst, wobei das besagte Element (50) verformbar ist, damit die besagte Windung (40, 140) zumindest eine permanente Kontaktfläche einerseits mit dem besagten Element (50) und andererseits mit der besagten Rampe (10) für variable Durchmesser der besagten Endwindung (40, 140) aufweist, wobei der besagte Federteller **dadurch gekennzeichnet ist, dass** das besagte Element (50) eine Lamelle ist, deren natürliche Form in der Ruheposition zur besagten Rampe (10) hin geneigt ist.

2. Federteller (100) nach Anspruch 1, **dadurch gekennzeichnet, dass** das besagte Element (50) über die besagte Zentrierfläche (13) hinaus übersteht.

3. Federteller (100) nach Anspruch 1 oder 2, **dadurch gekennzeichnet, dass** der besagte Federteller einen Anschlag (11) umfasst, der dazu bestimmt ist, einen Windungsanfang (41, 141) der besagten Windung (40, 140) zu stoppen.

4. Federteller (100) nach irgendeinem der vorhergehenden Ansprüche, **dadurch gekennzeichnet, dass** das besagte Element (50) eine Lamelle ist, die ein konisches Profil aufweist.

5. Aufhängungsvorrichtung für ein Kraftfahrzeug, **dadurch gekennzeichnet, dass** sie zumindest einen Federteller (100) nach irgendeinem der vorhergehenden Ansprüche umfasst.

6. Aufhängungsvorrichtung für ein Kraftfahrzeug nach Anspruch 5, **dadurch gekennzeichnet, dass** der besagte Federteller (100) ein unterer Federteller einer Feder der besagten Aufhängungsvorrichtung ist.

7. Kraftfahrzeug, **dadurch gekennzeichnet, dass** es eine Aufhängungsvorrichtung nach Anspruch 5 oder 6 umfasst.

8. Verfahren zum Montieren einer Endwindung (40, 140) einer Spiralfeder und eines Federtellers (100) nach irgendeinem der Ansprüche 1 bis 4, **dadurch gekennzeichnet, dass** es die Schritte umfasst:
- Positionieren der besagten Windung (40, 140) auf der besagten Rampe (10);
- Einführen der besagten Windung (40, 140) unter das besagte Element (50).

9. Verfahren zum Montieren nach Anspruch 8, **dadurch gekennzeichnet, dass** es darüber hinaus einen Schritt umfasst, der darin besteht:
- den besagten Windungsanfang (41,141) in Kontakt mit dem besagten Anschlag (11) zu positionieren.

## Claims

1. Cup (100) comprising at least one retaining element (50) for securing said cup (100) to an end coil (40, 140) of a helical spring, said cup (100) comprising a ramp (10) for supporting said coil (40, 140) and a centring surface (13) for centring said end coil (40, 140), said retaining element (50) is deformable such that the coil (40, 140) has at least one surface for permanent contact both with the retaining element (50) and with the ramp (10) for variable diameters of the end coil (40, 140), said cup being **characterised in that** said element (50) is a blade of which the natural shape at rest is tilted towards said ramp (10).

2. Cup (100) according to claim 1, **characterised in that** said element (50) protrudes from said centring surface (13).

3. Cup (100) according to claim 1 or 2, **characterised in that** said cup comprises a stop (11) intended to stop a coil departure (41, 141) of said coil (40, 140).

4. Cup (100) according to any of the preceding claims, **characterised in that** said element (50) is a blade that has a tapered profile.

5. Device for suspending a motor vehicle **characterised in that** it comprises at least one cup (100) according to any of the preceding claims.

6. Device for suspending a motor vehicle according to claim 5, **characterised in that** said cup (100) is a lower cup of a spring of said device for suspending.

7. Motor vehicle **characterised in that** it comprises a device for suspending according to claim 5 or 6.

8. Method for assembling an end coil (40, 140) a helical spring and a cup (100) according to any of claims 1 to 4, **characterised in that** it comprises the steps consisting in:
- positioning said coil (40, 140) on said ramp (10);
- introducing said coil (40, 140) under said element (50).

9. Method for assembling according to claim 8, **characterised in that** it further comprises a step consisting in:
- positioning said coil departure (41, 141) in contact with said stop (11).
